(19) **Europäisches Patentamt**

**European Patent Office**

**Office européen des brevets**

(11) **EP 0 998 172 B1**

(12) **EUROPÄISCHE PATENTSCHRIFT**

(45) Veröffentlichungstag und Bekanntmachung des Hinweises auf die Patenterteilung:
**07.05.2003 Patentblatt 2003/19**

(51) Int Cl.⁷: **H05B 41/292**, H02H 7/122, H02H 3/38

(21) Anmeldenummer: **99120660.8**

(22) Anmeldetag: **19.10.1999**

(54) **Verfahren und Vorrichtung zur Kurzschlusserkennung bei einem Vorschaltgerät einer Hochdruckgasentladungslampe in einem Kraftfahrzeug**

Process and device for short-circuit detection in a high-pressure discharge lamp ballast in a vehicle

Procédé et dispositif pour la détection de court-circuit dans un ballast pour lampe à décharge à haute pression dans un véhicule

(84) Benannte Vertragsstaaten:
**AT BE CH CY DE DK ES FI FR GB GR IE IT LI LU MC NL PT SE**

(30) Priorität: **22.10.1998 DE 19848756**

(43) Veröffentlichungstag der Anmeldung:
**03.05.2000 Patentblatt 2000/18**

(73) Patentinhaber: **Hella KG Hueck & Co.**
**59552 Lippstadt (DE)**

(72) Erfinder: **Radtke, Volker**
**33330 Gütersloh (DE)**

(56) Entgegenhaltungen:
**DE-A- 4 322 139        DE-A- 19 533 103**
**US-A- 5 295 036**

**Beschreibung**

Die Erfindung betrifft ein Verfahren und eine Vorrichtung zur Kurzschlußerkennung bei einem Vorschaltgerät einer Hochdruckgasentladungslampe in einem Kraftfahrzeug.

Um ein Vorschaltgerät für eine Hochdruckgasentladungslampe gegen Zerstörung durch einen Kurzschluß einer Lampenzuleitung zur Fahrzeugmasse zu schützen, ist es notwendig, diesen Fehlerfall, welcher zum Beispiel durch eine defekte Isolierung entstehen kann, als solchen zu detektieren, mit Hilfe einer Sicherheitsschaltung das Vorschaltgerät abzuschalten, bevor Bauelemente überlastet werden.

Ein Verfahren und eine Vorrichtung, welche bei einer Hochdruckgasentladungslampe die Betriebszustände ("Lampe ein" und "Lampe aus") erkennt, ist aus der EP 0 459 126 B1 bekannt. Hierin wird zur Statuserkennung der Parameter "Lampenstrom" ausgewertet, wobei das Statussignal gesetzt wird, wenn ein vorgegebener Lampenstrom überschritten wird, und wieder zurückgesetzt wird, wenn ein minimaler Lampenstrom unterschritten wird. Aus der EP 0 459 126 B1 ist zudem bekannt, die Lampenspannung zu erfassen. Aus den Werten der Lampenspannung und des Lampenstromes wird während des Zündvorganges die Lampenleistung bestimmt, welche dann zeitabhängig gesteuert wird. Eine Kurzschlußerkennung ist bei dem Gegenstand der EP 0 459 126 B1 nicht vorgesehen.

Problematisch an einem Kurzschluß einer Lampenleitung gegen Fahrzeugmasse ist, daß ein solcher Fehler nur schwer erfaßbar ist, da der Kurzschlußstrom aus dem System herausfließt und nicht über den Stromfühler des Lampenkreises fließt oder nicht vom Lampenstrom differenziert werden kann.

Aus der DE 41 17 589 A1 ist ein Vorschaltgerät bekannt, bei dem zur Erkennung dieses Fehlerfalles die Sekundärseite des Spannungswandlers über einen zusätzlichen Stromfühlerwiderstand mit der primärseitigen Masse verbunden ist und der Kurzschlußstrom gemessen wird. Diese bekannte Schaltung hat jedoch verschiedene Nachteile. So haben Sekundär- und Primärseite nicht mehr den gleichen Bezugspunkt, es ist ein relativ hoher Bauteileaufwand zur Erfassung und Filterung eines Kurzschlußstromes erforderlich und die Schaltungsanordnung ist relativ störempfindlich.

Aus der DE-A- 1 95 33 103 ist ein Verfahren bekannt, durch welches ein Kurzschluß zwischen einer Lampenleitung und der Erde erkannt werden kann. Hierzu wird die Ausgangsspannung einer Gleichspannungsverstärkerschaltung überwacht. Das Vorliegen eines Kurzschlusses zwischen Lampenleitung und Erde wird dadurch erkannt, daß die Ausgangsspannung der Gleichspannungsverstärkerschaltung eine Rechteckwellenform annimmt.

In der deutschen Patentanmeldung DE-A- 4 322 139 wird ein Beleuchtungsschaltkreis für eine Fahrzeugentladungslampe beschrieben, welcher durch Überwachung der Spannung am Ausgang des DC-AC-Wandlers unter anderem einen Kurzschluß zwischen einer Lampenleitung und Erde erkennen kann.

Im US-Patent US-A- 5 295 036 wird die, zur Leistungsregelung der Gasentladungslampe ermittelte Spannung und der ermittelte Strom am Ausgang der Gleichspannungsverstärkerschaltung verwendet, um einen Kurzschluß der Lampenanschlüsse und zwei verschiedene Leerlauffehler zu erkennen. Eine Möglichkeit zur Erkennung eines Kurzschlusses gegen Fahrzeugmasse ist der US-A- 5 295 036 allerdings nicht entnehmbar und bei der beschriebenen Schaltungsanordnung prinzipbedingt auch nicht möglich.

Die alleinige Spannungsüberwachung zur Erkennung von Fehlerzuständen an der Entladungslampe, wie sie in der DE-A- 1 95 33 103 und der DE-A- 4 322 139 beschrieben werden, ist aber in doppelter Hinsicht nachteilig. Zum einen ist eine Fehlererkennung nur im AC-Betrieb möglich. Das Starten der GDL erfolgt aber üblicherweise im DC-Betrieb, so daß gerade in der Startphase eine Kurzschlußerkennung nicht möglich ist. Zum zweiten kann auch eine mechanisch nicht stabil brennende Lampe, verursacht z. B. durch mechanische Beschleunigungen, zu einer rechteckförmigen Spannungswelligkeit führen, ohne daß ein Kurzschluß gegen Erde vorliegt.

Es ist die Aufgabe der Erfindung ein besonders einfaches und störsicheres Verfahren sowie eine besonders kostengünstige Vorrichtung zur Erfassung des Kurzschlusses einer Lampenleitung gegen Fahrzeugmasse zu schaffen, welches die vorgenannten Nachteile vermeidet.

Diese Aufgabe wird durch die Merkmalskombinationen der Ansprüche 1 und 2 gelöst.

Erfindungsgemäß erfolgt die Kurzschlußerkennung mittels einer kombinatorischen Auswertung der Lampenparameter Strom und Spannung. Besonders vorteilhaft ist, daß zur Erzeugung des Kurzschlußsignales ausschließlich Signale verwendet werden, die zur Steuerung des Wandlers bereits vorhanden sind, was den erforderlichen Aufwand gering hält. Diese Signale werden durch ein einfaches Bauteil (nämlich ein Logikgatter) miteinander verknüpft. Die so ausgebildete erfindungsgemäße einfache Schaltungsanordnung führt das erfindungsgemäße Verfahren vollautomatisch aus.

Da die Hochdruckgasentladungslampe mit einem niederfrequenten Wechselstrom betrieben wird, fließt der Kurzschlußstrom pulsartig nur in jeweils einer Halbwelle. Vorteilhaft ist, wenn die Sicherheitsschaltung nach einer vorgegebenen Anzahl, das heißt nach einmaligem oder mehrmaligem Auftreten des Kurzschlußsignales, den Spannungswandler dauerhaft abschaltet.

Im folgenden soll ein Ausführungsbeispiel der erfindungsgemäßen Vorrichtung sowie des erfindungsgemäßen Verfahrens anhand der Zeichnung dargestellt und erläutert werden.

Die einzige Figur skizziert den der erfindungsgemäßen Vorrichtung zugrunde liegenden Schaltungsaufbau.

Eine Gleichspannungsquelle (B) - im allgemeinen ist dies die Fahrzeugbatterie - bestromt einen Spannungswandler (W), der die zum Betrieb der Hochdruckgasentladungslampe (GDL) erforderliche Wechselspannung zur Verfügung stellt. Eine dem Spannungswandler (W) nachgeschaltete Zündeinrichtung (Z) erzeugt überdies die zum Starten der Gasentladung erforderlichen Hochspannungsimpulse.

Weiterhin ist eine Sicherheitsschaltung (Si) vorhanden, welche den Spannungswandler (W) steuert und insbesondere diesen im Fehlerfall, z. B. beim Anliegen eines Kurzschlußsignales (KS), abschalten kann.

Eine Erfassungseinrichtung (E) erfaßt zwischen dem Spannungswandler (W) und der Zündeinrichtung (Z) die Parameter Lampenspannung (U) und Lampenstrom (I) und legt jeweils ein zu diesen Parametern proportionales Spannungssignal (U1) und Stromsignal (I1) an einen Komparator (X1) und einen Fensterkomparator (X2). Der Fensterkomparator (X2) erzeugt ein logisches H-Signal, wenn eine erste Stromschwelle (IS1) überschritten wird; er liefert ein L-Signal, wenn eine zweite Stromschwelle (IS2) unterschritten wird. Der Komparator (X1) kippt von H nach L, wenn eine Spannungsschwelle (US) unterschritten wird. Für die Dimensionierung der Spannungsschwelle (US) ergeben sich folgende Grenzen:

$$\sqrt{P_{max}*(RG+RV)} < US < U_{Lmin}$$

wobei $P_{max}$ die maximale Leistung des Spannungswandlers (W) ist, RV der Verlustwiderstand zwischen Hochdruckgasentladungslampe und Wandlerausgang, RG der Kurzschlußwiderstand und $U_{Lmin}$ die minimale Nennlampenspannung. Die Stromschwellen (IS1 und IS2) sind so gewählt, daß eine störsichere Bestimmung des Lampenstromes garantiert ist.

Die Ausgangssignale der Komparatoren (X1, X2) sind mit den Eingängen einer digitalen Logikschaltung (NOR), hier ausgeführt als Nicht-Oder-Gatter, verbunden. Das Ausgangssignal der Logikschaltung (NOR) ist das Kurzschlußsignal (KS), welches im Fehlerfall, das heißt bei einem Kurzschluß zwischen einer Lampenleitung gegen Fahrzeugmasse, ein H-Signal ist. In der Sicherheitsschaltung wird das digitale Signal aufbereitet und zum Abschalten des Spannungswandlers (W) verwendet.

Die Funktionsweise der skizzierten Schaltungsanordnung, welche das erfindungsgemäße Verfahren ausführt, ist folgende:

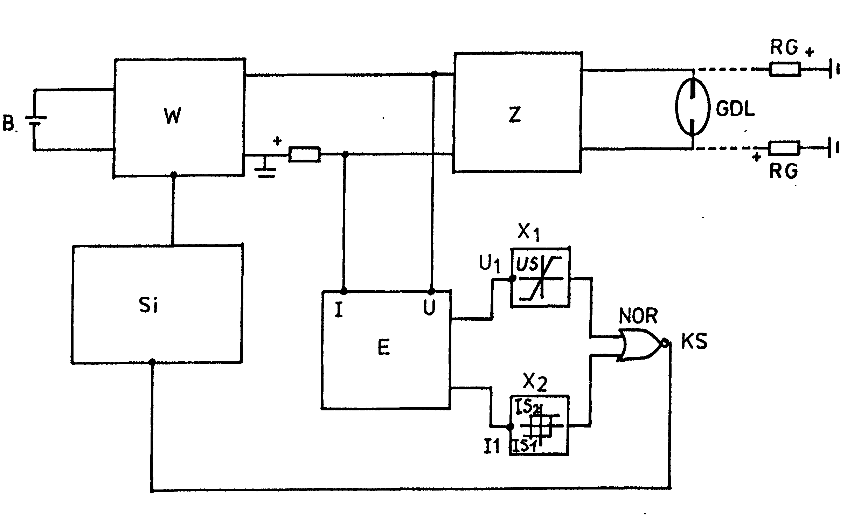

Die in der Figur 1 eingezeichneten Widerstände (RG) stellen symbolisch den Kurzschluß eines der Lampenanschlüsse zur Fahrzeugmasse dar. Die Definition für den Kurzschluß ist erfüllt, wenn RG < 3 $\Omega$ beträgt. In der Praxis tritt dieser Fall auf, wenn z. B. eine Zuleitung mit defekter Isolation gegen die Fahrzeugmasse gelangt. Der Kurzschluß führt zu folgenden Reaktionen: Die beiden Lampenzuleitungen toggeln mit der Brückenfrequenz des Spannungswandlers (W) von ca. 300 Hz zwischen jeweils 0 Volt und der Lampenspannung von nominell ca. 85 Volt. Kommt es zum Kurzschluß, während die Leitung auf 0-Volt-Potential liegt, erfolgt zunächst keine Reaktion. In der zweiten Halbwelle wird dann die Wandlerspannung durch den Kurzschluß belastet. Der Spannungseinbruch führt dazu, daß die Hochdruckgasentladungslampe (GDL) verlischt und somit die gesamte Wandlerleistung in den Kurzschluß und die internen Verluste gelangt. Die Erfassungseinrichtung (E) registriert, daß im Lampenkreis kein Lampenstrom (I) fließt. Aufgrund der zusammengebrochenen Lampenspannung (U) unterschreitet das proportionale Spannungssignal (U1) die Spannungsschwelle (US), wodurch der Ausgang des Komparators (X1) low wird. Da der Ausgang des Fensterkomparators (X2) aufgrund des fehlenden Lampenstromes ebenfalls low ist, ergibt die Nicht-Oder-Verknüpfung der Logikschaltung (NOR) an deren Ausgang ein high-Signal, welches als Kurzschlußsignal (KS) an der Sicherheitsschaltung (Si) anliegt, wodurch die Sicherheitsschaltung (Si) den Kurzschluß gegen Masse als solchen erkennt.

Nach dem erneuten Umschalten der Brücke ist der Kurzschluß wieder beseitigt. Da die Hochdruckgasentladungslampe (GDL) aus ist, steigt die Spannung am Ausgang des Spannungswandlers (W) jetzt wieder stark an. Beim nächsten Polaritätswechsel wird der Spannungswandler (W), wie bereits beschrieben, wieder kurzgeschlossen. Das Kurzschlußsignal (KS) toggelt also mit der Brückenfrequenz des Spannungswandlers (W) zwischen high und low. Je nach Auslegung der Sicherheitsschaltung (abhängig von der verantwortbaren Belastung der Bauelemente, Störabstand usw.) kann bereits das erste H-Signal zum Abschalten des Spannungswandlers (W) führen, oder aber es werden mehrere Impulse des Kurzschlußsignales (KS) gezählt und dann abgeschaltet.

Bezugszeichenliste

Verfahren und Vorrichtung zur Kurzschlußerkennung bei einem Vorschaltgerät bei einer Hochdruckgasentladungslampe in einem Kraftfahrzeug

B        Gleichspannungsquelle

E        Erfassungseinrichtung

NOR    (digitale) Logikschaltung

GDL      Hochdruckgasentladungslampe

| Si | Sicherheitsschaltung |
|---|---|
| X1 | Komparator |
| X2 | Fensterkomparator |
| Z | Zündeinrichtung |
| I | Lampenstrom |
| I1 | zum Lampenstrom proportionales Stromsignal |
| U | Lampenspannung |
| U1 | zur Lampenspannung proportionales Spannungssignal |
| IS1 | oberer Sollwert des Lampenstromes (obere Stromschwelle) |
| IS 2 | unterer Sollwert des Lampenstromes (untere Stromschwelle) |
| US | Sollwert der Lampenspannung (Spannungsschwelle) |
| KS | Kurzschlußsignal |
| RG | Kurzschlußwiderstand |

**Patentansprüche**

1.  Verfahren zur Kurzschlußerkennung bei einem Vorschaltgerät einer Hochdruckgasentladungslampe in einem Kraftfahrzeug, bei dem aus einer Gleichspannung eine Wechselspannung erzeugt wird, die Wechselspannung einer Zündeinrichtung (Z) zum Zünden der Hochdruckgasentladungslampe (GDL) zugeführt wird, eine Lampenspannung (U) und ein Lampenstrom (I) gemessen wird, der Istwert der Lampenspannung (U bzw. U1) und des Lampenstromes (I bzw. I1) mit einem Sollwert verglichen wird, wobei ein einen Kurzschluß einer Lampenleitung gegen Fahrzeugmasse anzeigendes Kurzschlußsignal (KS) erzeugt wird, wenn die Lampenspannung (U bzw. U1) einen vorgegebenen Sollwert (US) unterschreitet und der Lampenstrom (I bzw. I1) einen vorgegebenen Sollwert (IS2) unterschreitet.

2.  Vorrichtung zur Kurzschlußerkennung bei einem Vorschaltgerät einer Hochdruckgasentladungslampe in einem Kraftfahrzeug mit einer Gleichspannungsquelle (B), die an einen Gleichspannungs-Wechselspannungswandler (W) angeschlossen ist, mit einer Zündeinrichtung (Z) zwischen dem Gleichspannungs-Wechselspannungswandler (W) und der Hochdruckgasentladungslampe (GDL) und mit einer Erfassungseinrichtung (E) zur Erfassung der Lampenspannung (U) und des Lampenstromes (I), wobei die Erfassungseinrichtung (E) ein zum erfaßten Lampenstrom (I) proportionales Stromsignal (I1) dem Eingang eines Fensterkomparators (X2) zuführt, wobei die Erfassungseinrichtung (E) ein zur erfaßten Lampenspannung (U) proportionales Spannungssignal (U1) dem Eingang eines Komparators (X1) zuführt und wobei der Ausgang des Komparators (X1) mit einem ersten Eingang und der Ausgang des Fensterkomparators (X2) mit einem zweiten Eingang einer digitalen NOR-Logikschaltung (NOR) verbunden ist und deren Ausgangssignal das Kurzschlußsignal (KS) ist, welches bei einem vorgegebenen digitalen Wert einen Kurzschluß einer Lampenleitung zur Fahrzeugmasse anzeigt.

3.  Vorrichtung nach Anspruch 2, wobei daß der Ausgang der digitalen Logikschaltung (NOR) mit einer Sicherheitsschaltung (Si) verbunden ist, die bei einem oder mehrfachem Auftreten des vorgegebenen Logikwertes des Kurzschlußsignales (KS) den Gleichspannungs-Wechselspannungswandler (W) abschaltet.

**Claims**

1.  Process for short-circuit detection in a high-pressure discharge lamp ballast in a motor vehicle, in which an alternate current is generated from a direct current, the alternate current is fed to an ignition device (Z) for igniting a high-pressure gas discharge lamp (GDL), a lamp current (U) and a lamp current (I) is measured, the actual value of the lamp voltage (U or U1 respectively) and the lamp current (I or I1 respectively) is compared to a nominal value, and a short-circuit signal (KS) is generated which indicates a short-circuit of a lamp connection to vehicle mass when the lamp current (U or U1 respectively) goes below a specified nominal value (US) and the lamp current (I or I1 respectively) goes below a specified nominal value IS2).

2.  Device for short-circuit detection in a high-pressure discharge lamp ballast in a motor vehicle comprising a direct current source (B) which is connected to an AC/DC converter (W), an ignition device (Z) between the AC/DC converter (W) and the high-pressure gas discharge lamp (GDL), and a detection device (E) for detecting a lamp voltage (U) and the lamp current (I), and the detection device (E) feeds a current signal (11) which is proportional to the detected lamp current (I) to the input of a window comparator (X2), and the detection device (E) delivers to the input of a comparator (X1) a voltage signal (U1) which is proportional to the detected lamp voltage (U), and the output of the comparator (X1) is connected to a first input, and the output of the window comparator (X2) to a second input of a digital NOR-logic circuit (NOR), and its output signal is the short-circuit signal (KS) which at a given digital value indicates a short-circuit of a lamp connection to the vehicle mass.

3. Device according to Claim 2, and the output of the digital logic circuit (NOR) is connected to a safety circuit (Si) which switches off the AC/DC converter in the event of single or repeated appearance of a given logic value of the short-circuit signal (KS).

**Revendications**

1. Procédé d'identification de court-circuit dans un ballast d'une lampe à décharge haute pression dans un véhicule automobile, selon lequel une tension alternative est produite à partir d'une tension continue, la tension alternative étant envoyée à un dispositif d'amorçage (Z) pour amorcer la lampe à décharge haute pression (GDL), une tension (U) et un courant (I) de la lampe sont mesurés, la valeur réelle de la tension (U ou U1) de la lampe et du courant (I ou I1) de la lampe est comparée à une valeur de consigne, et dans lequel un signal de court-circuit (KS), qui indique un court-circuit d'un conducteur de la lampe par rapport à la masse du véhicule, est produit lorsque la tension (U ou U1) de la lampe tombe au-dessous d'une valeur de consigne prédéterminée (US), et que le courant (I ou I1) de la lampe tombe au-dessous d'une valeur de consigne prédéterminée (IS2).

2. Dispositif pour détecter un court-circuit dans un ballast d'une lampe de décharge haute pression dans un véhicule automobile comportant une source de tension continue (B), qui est raccordée à un convertisseur tension continue - tension alternative (W), un dispositif d'amorçage (Z) disposé entre le convertisseur à courant continu - courant alternatif (W) et la lampe de décharge haute pression (GDL), et un dispositif de détection (E) pour détecter la tension (U) et le courant (I) de la lampe, le dispositif de détection (E) envoyant un signal de courant (I1), proportionnel au courant détecté (I) de la lampe, à l'entrée d'un comparateur à fenêtre (X2), le dispositif de détection (E) envoie un signal de tension (U), proportionnel à la tension détectée (U) de la lampe, à l'entrée d'un comparateur (X1), et dans lequel la sortie du comparateur (X1) est reliée à une première entrée et la sortie du comparateur à fenêtre (X2) est reliée à une seconde entrée d'un circuit logique NON-OU numérique (NOR), et le signal de sortie de ce circuit est le signal de court-circuit (KS), qui, pour une valeur numérique prédéterminée, indique un court-circuit d'un conducteur de la lampe en direction de la masse du véhicule.

3. Dispositif selon la revendication 2, selon lequel la sortie du circuit logique numérique (NOR) est reliée à un circuit de sécurité (Si), qui, lors d'une apparition ou d'une apparition multiple de la valeur logique prédéterminée du signal de court-circuit (KS), débranche le convertisseur tension continue - tension alternative.